# EUROPÄISCHE PATENTSCHRIFT

(11) **EP 2 082 344 B1**
(45) Veröffentlichungstag und Bekanntmachung des Hinweises auf die Patenterteilung: **03.10.2012**
(21) Anmeldenummer: 07821346.9
(22) Anmeldetag: 15.10.2007
(51) Int. Cl.: G06F 21/00

(54) **ANORDNUNG UND VERFAHREN ZUR BEREITSTELLUNG VON DATEN**
ARRANGEMENT AND METHOD FOR PROVIDING DATA
AGENCEMENT ET PROCÉDÉ POUR LA MISE À DISPOSITION DE DONNÉES

(30) Priorität: 17.10.2006 DE 102006048980
(43) Veröffentlichungstag der Anmeldung: 29.07.2009
(73) Patentinhaber: Nokia Siemens Networks GmbH & Co. KG, 81541 München (DE)
(72) Erfinder: LÖBIG, Norbert, 64291 Darmstadt (DE)
(86) Internationale Anmeldenummer: PCT/EP2007/060979
(87) Internationale Veröffentlichungsnummer: WO 2008/046814

(56) Entgegenhaltungen:
- US-A1- 2005 129 231
- US-B1- 6 466 671

## Beschreibung

Die Erfindung bezieht sich auf eine in dem Oberbegriff des Patentanspruchs 1 angegebene Anordnung und ein in dem Oberbegriff des Anspruchs 6 angegebenes Verfahren zur Bereitstellung von bezahlpflichtigen Daten, wie zum Beispiel Multimediadaten.

Aus dem Dokument US-B1-6 466 671 (MAILARD MICHEL [FR] ET AL) 15.Oktober 2002 (2002-10-15)ist eine Smartcard bekannt zum Gebrauch mit einem Empfänger verschlüsselter Broadcast Signale, welcher einen Mikroprozessor umfasst zur Ermöglichung und Steuerung einer Entschlüsselung besagter Signale.

In dem Dokument US 2005/129231 A1 (KELLEY SEAN S [US] ET AL) 16 Juni 2005 (2005-06-16) wird ein Verfahren und eine Vorrichtung beschrieben zur Übertragung und zum Empfang von Broadcast Diensten. Ein Empfang einer Broadcast Multicast Übertragung wird hierbei angefordert. Eine vorläufige, für kurze Zeit aktualisierte Schlüsselinformation wird übertragen oder empfangen vor Übertragung oder Empfang eines Subskriptionsschlüssels für die angeforderte Broadcast Übertragung des Dienstes.

Um auf bezahlpflichtige Daten auf Empfängerseite zugreifen zu können, werden Zugriffsinformationen, wie zum Beispiel Kanalnummer und Digital Rights Management Schlüssel, nach einem empfängerseitigen Bezahlvorgang bereitgestellt. Der Bezahlvorgang ist beispielsweise mit der Überprüfung eines Guthabens oder einer Kreditwürdigkeit eines Kunden sowie mit einer der Bezahlung entsprechenden Speicherung von Daten an zentraler Stelle verbunden.

Eine derartige Anordnung sowie das zugehörige Verfahren weisen jedoch den Nachteil auf, dass die Zugriffsinformationen erst nach einem erfolgreichen Bezahlvorgang bereitgestellt werden. Bei einer Störung oder Verzögerung des Bezahlvorgangs, beispielsweise bei einer Überlastung oder einem Ausfall zentraler Einheiten, kann empfängerseitig nicht oder nur verzögert auf bezahlpflichtige Daten zugegriffen werden.

Es ist Aufgabe der vorliegenden Erfindung eine Anordnung und ein Verfahren anzugeben, welche diesen Nachteil vermeiden.

Gemäß der Erfindung wird die gestellte Aufgabe durch die im Patentanspruch 1 oder 6 aufgeführten Merkmale gelöst.

Durch die erfindungsgemäßen Maßnahmen ergibt sich der Vorteil, dass Zugriffsinformationen für bezahlpflichtige Daten schon vor einem Bezahlvorgang empfängerseitig hinterlegt sind und daher unabhängig von lastabhängigen oder ausfallbedingten Verzögerungen bei dem Bezahlvorgang auf bezahlpflichtige Daten empfängerseitig zugegriffen werden kann.

Der Gegenstand der Erfindung bringt den weiteren Vorteil mit sich, dass insbesondere diejenigen Zugriffsinformationen empfängerseitig hinterlegt werden, bei denen eine Überlastsituation beim Bezahlen von bezahlpflichtigen Daten erwartet wird oder festgestellt wurde.

Der Gegenstand der Erfindung bringt den weiteren Vorteil mit sich, dass die Ausgabe und Bezahlung bezahlpflichtiger Daten last- und ausfallunabhängig gewährleistet wird.

Weitere vorteilhafte Ausbildungen sind in den Unteransprüchen angegeben.

Weitere Besonderheiten der Erfindung werden aus den nachfolgenden Erläuterungen mehrerer Ausführungsbeispiele anhand von Zeichnungen ersichtlich.

Es zeigen:
Fig. 1: ein Blockschaltbild einer Teilnehmereinheit
Fig. 2: ein Blockschaltbild einer Anordnung zur Bereitstellung von Daten und
Fig. 3: ein Blockschaltbild eines Datenübertragungsnetzes.

Die Erfindung beschreibt eine Anordnung und das dazugehörige Verfahren zur Bereitstellung von bezahlpflichtigen Daten MM1, MM2, ....MMn, beispielsweise Fernsehprogrammbeiträge oder Videos, mit einem Mittel E, beispielsweise einer Set-Top Box, in der wählbaren oder bestimmbaren, bezahlpflichtigen Daten MM1, MM2, ....MMn zugeordnete Zugriffsinformationen ZI1, ZI2, ...ZIn vor einem Bezahlvorgang hinterlegbar und die bezahlpflichtigen Daten MM1,MM2, ...MMn an eine Ausgabeeinheit AE, beispielsweise ein Fernsehgerät, ausgebbar sind.

In dem Mittel E werden beispielsweise nur diejenigen Zugriffsinformationen ZI1, ZI2, ...ZIn hinterlegt, bei denen das Mittel E oder eine zentrale Einheit B eine aktuelle oder zu erwartende Überlastsituation beim Bezahlvorgang für bezahlpflichtige Daten MM1, MM2, ....MMn ermittelt hat oder bei denen das Mittel E oder eine zentrale Einheit B von einer aktuellen oder zu erwartenden Überlastsituation beim Bezahlvorgang für bezahlpflichtige Daten MM1, MM2, ....MMn über eine Schnittstelle, z. B. eine Signalisierungsschnittstelle oder eine Bedienerschnittstelle informiert wird.

Das Mittel E überträgt vor oder während der Ausgabe der bezahlpflichtigen Daten MM1, MM2, ....MMn die für den Bezahlvorgang erforderlichen empfängerseitig eingebbaren Freischaltungsdaten an die zentrale Einheit B und bricht die Ausgabe der bezahlpflichtigen Daten MM1, MM2, ....MMn ab, wenn keine positive Quittung des Bezahlvorgangs von der zentralen Einheit B innerhalb eines festlegbaren Zeitabschnitts empfangen wird oder eine negative Quittung des Bezahlvorgangs von der zentralen Einheit B empfangen wird.

Das Mittel E verwendet die in dem Mittel E hinterlegten Zugriffsinformationen ZI1, ZI2, ...ZIn zur Ausgabe der bezahlpflichtigen Daten MM1, MM2, ....MMn unbedingt oder bedingt insbesondere, falls das Mittel E eine Überlastsituation, eine Ausfallsituation oder eine Störung bei dem Bezahlvorgang vor oder bei Ausgabe der bezahlpflichtigen Daten MM1, MM2, ....MMn ermittelt.

Das Mittel E verwendet bei Verzögerung oder Störung des Bezahlvorgangs für zu bezahlende bezahlpflichtige Daten MM1, MM2, ....MMn die in dem Mittel E hinterlegten Zugriffsinformationen ZI1, ZI2, ...ZIn.

Das Mittel E wendet sich solange an die zentrale Einheit B zum Bezahlen von zu bezahlenden bezahlpflichtigen Daten MM1, MM2, ...MMn, bis der Bezahlvorgang erfolgreich abgeschlossen ist. Letzteres kann insbesondere auch während oder nach der Ausgabe der bezahlpflichtigen Daten MM1, MM2, ....MMn erfolgen.

Die Zugriffsinformationen ZI1, ZI2, ...ZIn enthalten beispielsweise Adressinformationen über Quellen der bezahlpflichtigen Daten MM1, MM2, ...MMn, insbesondere Internet Protokoll Adressen von Servern oder von Multicast-Gruppen und/oder Datenspeicheradressen, mit denen das Mittel E auf die wählbaren, bezahlpflichtigen Daten MM1, MM2, ...MMn zugreifen kann.

Die Zugriffsinformationen ZI1, ZI2, ...ZIn enthalten beispielsweise Informationen, mit denen das Mittel E die wählbaren, bezahlpflichtigen Daten MM1, MM2, ...MMn entschlüsseln und/oder auf die Bedürfnisse der Schnittstelle zur Ausgabeeinheit AE anpassen kann.

Das Mittel E kann bei einer teilnehmerseitigen Auswahl von bezahlpflichtigen Daten MM1, MM2, ...MMn die für den Bezahlvorgang notwendigen Daten teilnehmerseitig abfragen und an die zentrale Einheit B übertragen. Bei einem dem Mittel E gemeldeten nicht erfolgreichen Bezahlvorgang wird die Ausgabe der bezahlpflichtigen Daten MM1, MM2, ...MMn abgebrochen oder eine erneute Abfrage der für den Bezahlvorgang notwendigen Daten vorgenommen und diese erneut an die zentrale Einheit B übertragen. Die erneute Abfrage der für den Bezahlvorgang notwendigen Daten erfolgt hierbei vorzugsweise ohne Unterbrechung der Ausgabe der bezahlpflichtigen Daten.

Eine erneute Abfrage der für den Bezahlvorgang notwendigen Daten erfolgt insbesondere im Falle unrichtiger teilnehmerseitiger Eingaben.

Der Abbruch der Ausgabe erfolgt im Falle eines nicht ausreichenden Guthabens oder Kredits oder wiederholt unrichtiger teilnehmerseitiger Eingaben für den Bezahlvorgang.

Das Mittel E gibt im Abbruchsfall oder im Fall wiederholter Abfrage der für den Bezahlvorgang notwendigen Daten an die

Ausgabeeinheit AE erläuternde Informationen für einen Teilnehmer aus.

Das Mittel E speichert die für den Bezahlvorgang notwendigen Daten beispielsweise lokal nicht flüchtig und überträgt diese bis zum Eintreffen einer Bezahlquittung von der zentralen Einheit B wiederholt an die zentrale Einheit B.

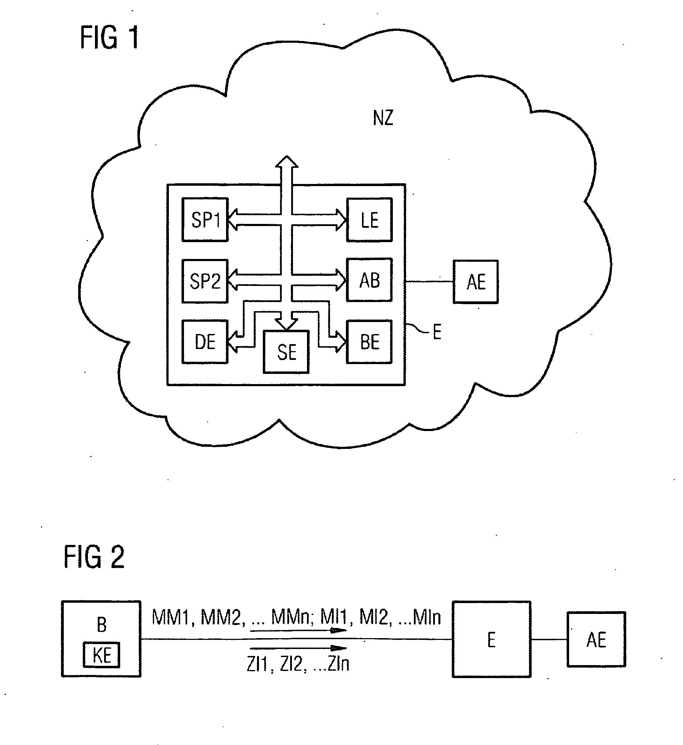

Fig. 1 zeigt ein Mittel E mit einer ersten und zweiten Speichereinheit SP1, SP2, einer Erkennungseinheit LE, einer Abbrucheinheit AB, einer Bedieneinheit BE, einer Datenleseeinheit DE und einer Datenschnittstelleneinheit SE. Das Mittel E ist zur Ausgabe und Anzeige von Daten mit einer Ausgabeeinheit AE, beispielsweise einem Fernsehempfangsgerät, verbunden.

In der ersten Speichereinheit SP1 werden Zugriffsinformationen ZI1, ZI2, ...ZIn für eine Auswertung und Ausgabe bezahlpflichtiger Daten MM1, MM2, ...MMn, beispielsweise Fernsehprogrammbeiträge oder Videodaten, gespeichert. In der zweiten Speichereinheit SP2 können im Bedarfsfall bezahlpflichtige Daten MM1, MM2, ...MMn zwischengespeichert werden. Die Speichereinheiten SP1 und SP2 können alternativ auch in einer einzigen Speichereinheit zusammengefasst sein. Die Dateneingabeeinheit DE, beispielsweise ein DVD-Laufwerk oder eine Speicherbausteinschnittstelle, ist für die Eingabe von auf Datenträgern gespeicherten bezahlpflichtige Daten MM1, MM2, ...MMn vorgesehen.

Die Datenschnittstelleneinheit SE ist mit einem Datenübertragungsnetz NZ, beispielsweise einem Internet Protokoll Netz, verbunden. Über die Datenschnittstelleneinheit SE kann das Mittel E zum Beispiel bezahlpflichtige Daten MM1, MM2, ...MMn, Zugriffsinformationen ZI1, ZI2, ...ZIn oder den bezahlpflichtigen Daten MM1, MM2, ...MMn zugehörige Dateninformationen MI1, MI2, ...MIn, wie beispielsweise Programminformationen, empfangen.

Wenn die Erkennungseinheit LE eine erste Signalisierung S1 abgibt, verwendet das Mittel E zur Ausgabe der bezahlpflichtigen Daten MM1, MM2, ...MMn die in der ersten Speichereinheit SP1 hinterlegten Zugriffsinformationen ZI1, ZI2, ...ZIn. Die erste Signalisierung S1 zeigt beispielsweise eine aktuelle oder eine zu erwartende Überlastsituation bei einem teilnehmerseitigen Bezahlvorgang zum Bezahlen der bezahlpflichtigen Daten MM1, MM2, ...MMn an. Allgemeiner kann ein Kriterium zur Generierung der ersten Signalisierung S1 beispielsweise das Ausbleiben von im Rahmen eines Bezahlvorgangs notwendigen Quittungen der zentralen Bereitstellungseinheit B sein oder das Vorhandensein lokal im Mittel E gespeicherter Zugriffsinformation ZI1,....ZIn oder die Zugreifbarkeit der Zugriffsinformation ZI1,..ZIn durch das Mittel E oder der Empfang einer externen Nachricht im Mittel E oder der nicht rechtzeitige Empfang einer externen Nachricht im Mittel E oder eine Eingabe an der Bedieneinheit BE.

Solange die Abbrucheinheit AB keine zweite Signalisierung S2 abgibt, wird die Ausgabe der bezahlpflichtigen Daten MM1, MM2, ...MMn fortgesetzt. Die Abbrucheinheit AB gibt eine zweite Signalisierung S2 dann ab, wenn ein teilnehmerseitiger Bezahlvorgang zum Bezahlen der bezahlpflichtigen Daten MM1, MM2, ...MMn innerhalb eines festlegbaren Zeitabschnitts nicht erfolgreich abgeschlossen wurde.

Eine dritte Signalisierung S3 wird an das Mittel E von extern herangebracht. Sie trifft über die Schnittstelleneinheit SE ein. Eine dritte Signalisierung kann beispielsweise durch die zentrale Bereitstellungseinheit B generiert sein. Sie kann insbesondere infolge eines Bedienvorgangs an der Bereitstellungseinheit B oder durch einen automatischen Ablauf entstehen. Die dritte Signalisierung kann insbesondere mindestens eine der Zugriffsinformationen ZI1,....ZIn transportierten und die Speicherung derselben in der Einheit SP1 bewirken. Die dritte Signalisierung kann ebenso insbesondere die Anforderung mindestens einer der Zugriffsinformationen ZI1,....ZIn mit nachfolgender Speicherung in der Einheit SP1 bewirken. Die dritte Signalisierung kann insbesondere auch eine Nutzung einer bereits lokal gespeicherten Zugriffsinformation ZI1,....ZIn zur Ausgabe bezahlpflichtiger Daten MM1,...MMn bewirken.

Das Ausführungsbeispiel in Fig 2 zeigt schematisch ein Mittel E, beispielsweise eine Set-Top Box, verbunden mit einer zentralen Einheit B, beispielsweise eine Dienstekoordinationseinheit. Die Verbindung kann zum Beispiel Teil eines Internet Protokoll basierten Netzes sein. In dem Mittel E werden sowohl kostenfreie Daten als auch bezahlpflichtige Daten MM1, MM2, ...MMn empfangen, die unter Steuerung der zentralen Einheit B von einer Datenquelle TVEC bereitgestellt werden. Im vorliegenden Ausführungsbeispiel ist die Datenquelle TVEC identisch mit der Bereitstellungseinheit B. Zusätzlich werden auch den Daten MM1, MM2, ...MMn zugehörige Dateninformationen MI1, MI2, ...MIn, die beispielsweise den Dateninhalt und Anfangs- und Endzeit einer Datenübertragung beschreiben, sowie Zugriffsinformationen ZI1, ZI2, ...ZIn von der zentralen Einheit B bereitgestellt beziehungsweise von dem Mittel E empfangen. Allgemeiner können die zugehörigen Dateninformationen MI1,... MIn und / oder die Zugriffsinformationen ZI1,...ZIn ganz oder teilweise auch von weiteren, von der Bereitstellungseinheit B verschiedenen Einheiten unter der Steuerung der Bereitstellungseinheit B im Mittel E empfangen werden. Eine Kennzeichnungseinheit KE in der zentralen Einheit B kann die frei wählbaren Dateninformationen MI1, MI2, ...MIn mit Kennzeichnungen markieren, die zum Ausdruck bringen, dass die dazugehörigen Zugriffsinformationen ZI1, ZI2, ...ZIn vor Bezahlung und beispielsweise vor Übertragung der entsprechenden bezahlpflichtigen Daten MM1, MM2, ...MMn von der zentralen Einheit B zum Mittel E übertragen werden sollen. Insbesondere werden von der zentralen Einheit B diejenigen Dateninformationen MI1, MI2, ...MIn markiert, bei denen die zentrale Einheit B eine Überlastsituation beim Bezahlen der bezahlpflichtigen Daten MM1, MM2, ...MMn erwartet. Diese Markierung ist dem Teilnehmer, also dem Benutzer des Mittels E, vorzugsweise nicht zugreifbar und sichtbar. Die Prognose einer Überlastsituation kann beispielsweise durch selbst lernende Knowledgemanagementsysteme ermittelt werden, die das bekannte und zukünftig erwartete Seh- und Hörverhalten der empfängerseitigen Teilnehmer auswerten. Eine andere Möglichkeit, Überlastsituationen zu erkennen, besteht darin, mit einem Lastverteilungsanalysesystem die Antwortzeiten der aus ggf. mehreren Servern bestehenden zentralen Einheit B oder einer der vorstehend genannten weiteren zentralen Einheiten oder einem von der zentralen Einheit B separaten Digital Rights Management Vergabesystem auszuwerten. Das Mittel E ist mit einer Ausgabeeinheit AE, beispielsweise einem Fernsehempfangsgerät, zur Ausgabe und Anzeige der Daten MM1, MM2, ...MMn und der Dateninformationen MI1, MI2, ...MIn verbunden.

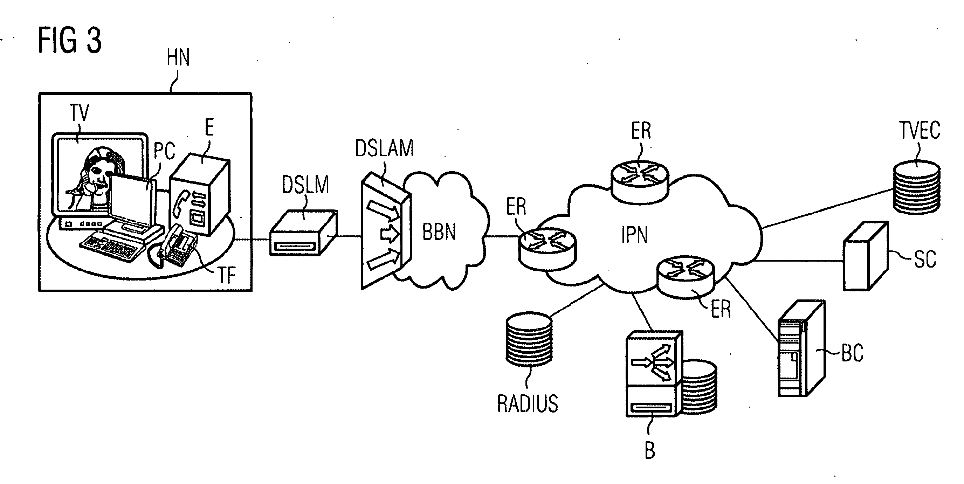

Fig 3 zeigt den Gegenstand der Erfindung integriert in einem Multimedianetz auf Basis von Internet Protokoll Technologie. Das Mittel E ist Bestandteil eines Heimnetzes HN, in dem beispielsweise Telefon TF, Personal Computer PC, Radioempfänger RE und Fernsehempfangsgerät TV angeordnet sind. Über ein Digital Subscriber Line Modem DSLM ist das Mittel E, beispielsweise eine Set Top Box, mit einem Digital Subscriber Line Access Multiplexer DSLAM eines Breitband Access Netzes BBN verbunden. Das Breitband Access Netz BBN ist wiederum über einen Edge Router ER mit dem Internet Protokoll Netz IPN verbunden. Über weitere Edge Router ER sind eine zentrale Einheit B, ein Remote Authentication Dial-In User Service Server RADIUS, ein Billing Center BC, ein Sicherheitsserver SC und ein Fernsehprogramm Kodierer TVEC an das Internet Protokoll Netz IPN angeschlossen. Alternativ oder zusätzlich zur Datenquelle TVEC zur Bereitstellung von Fernsehprogrammen kann auch ein Videoon-Demand Server als Datenquelle TVEC vorhanden sein, der in Fig. 3 nicht dargestellt ist.

Ist mit keiner Lastsituation beim Bezahlen von bezahlpflichtigen Daten MM1, MM2, ...MMn, insbesondere Fernsehprogrammbeiträgen, im Billing Center BC oder der zentralen Einheit B zu rechnen, wird beim Aufruf eines bezahlpflichtigen Fernsehprogrammbeitrags durch einen Teilnehmer des Heimnetzes HN der Bezahlvorgang durchgeführt, und das Mittel E erhält nach erfolgreicher Bezahlung die Zugriffsinformation ZI. Ist absehbar, dass eine Überlastsituation für einen bezahlpflichtigen Fernsehprogrammbeitrag auftreten wird, wird dieser, wie in der Beschreibung zu Fig. 2 angegeben, markiert. Diese Markierung ist dem Mittel E mit der Dateninformation MI, auch Programmdaten genannt, verfügbar. Programmdaten und Markierung werden dem Mittel E durch einen Download-Vorgang zur Verfügung gestellt. Dieser kann per Unicast oder Mulitcast erfolgen.

Aufgrund der Markierung wird die für den markierten Fernsehprogrammbeitrag erforderliche Zugriffsinformation ZI, wie beispielsweise die Kanalnummer, die IP Multicast Adresse des Programms und ein Digital Rights Management Schlüssel, ebenfalls vorsorglich in das Mittel E geladen. Dies erfolgt auch per Downloadvorgang im Unicast oder Multicast, beispielsweise im selben Downloadvorgang wie bei der Bereitstellung der Markierung und der Programmdaten. Der Downloadvorgang erfolgt vorzugsweise verschlüsselt. Die Schnittstelle zwischen zentraler Einheit B und Sicherheitsserver SC ist für die Ausgabe eines Digital Rights Management Schlüssels an die zentrale Einheit B zum Zwecke eines Downloads des Schlüssels an das Mittel E entsprechend angepasst. Alternativ kann die Schlüsselinformation auch in einem eigenen Downloadvorgang direkt von dem Sicherheitsserver SC bezogen werden.

Entscheidet sich ein Teilnehmer des Heimnetzes HN vor oder nach Beginn eines bezahlpflichtigen Fernsehprogrammbeitrags für dessen Ausgabe und Anzeige, so versucht das Mittel E den Bezahlvorgang abzuwickeln. Das Mittel E bietet beispielsweise dem Teilnehmer über die Ausgabeeinheit AE ein Eingabetableau .für Kennung- und Passworteingabe an und sendet nach Eingabe durch den Teilnehmer diese eingegebenen Daten an die zentrale Einheit B. Erfolgt von der zentralen Einheit B keine sofortige Antwort wegen beispielsweise einer Überlastsituation, so geht das Mittel E von einer Überlastsituation aus. Das Mittel E greift dann sofort auf die in dem Mittel E gespeicherte Zugriffsinformation ZI des bezahlpflichtigen Fernsehprogrammbeitrags zu, nimmt an der entsprechenden Mulitcastgruppe teil und entschlüsselt den Fernsehprogrammbeitrag mittels des in dem Mittel E bereits gespeicherten Digital Rights Management Schlüssel. Das heißt, der Teilnehmer erhält Zugriff auf den bezahlpflichtigen Fernsehprogrammbeitrag, obwohl er noch nicht bezahlt hat.

Während der Ausgabe des Fernsehprogrammbeitrags wendet sich das Mittel E wiederholt an die zentrale Einheit B zur Einleitung des Bezahlvorgangs. Hat die zentrale Einheit B und das Billing Center BC den Überlastzustand verlassen, erfolgt die sofortige Bearbeitung des Bezahlvorgangs. Kann der Bezahlvorgang positiv abgewickelt werden, ergeht eine positive Quittung von der zentralen Einhiet B an das Mittel E, und diese schließt den Vorgang ab.

Wird der Bezahlvorgang nicht positiv abgewickelt, weil beispielsweise der Teilnehmer kein ausreichendes Bezahlguthaben besitzt, erfolgt eine negative Quittung an das Mittel E. Dieses unterbricht die Ausgabe des bezahlpflichtigen Fernsehprogrammbeitrags unter Anzeige einer entsprechenden Meldung auf beispielsweise der Anzeigeeinheit AE.

Kann der Bezahlvorgang nicht durchgeführt werden, weil der Teilnehmer einen Eingabefehler gemacht hat, wird die Ausgabe ebenfalls unterbrochen und eine Aufforderung zur erneuten Eingabe von Kennung und Passwort erfolgt. Alternativ wird die Ausgabe des Programmbeitrags nicht unterbrochen, und die Eingabeaufforderung erfolgt bei laufendem Programm. Führt auch die erneute Eingabe nicht zu einem erfolgreichen Bezahlvorgang, wird die Ausgabe des Fernsehprogrammbeitrags endgültig abgebrochen.

Es besteht auch die Möglichkeit, alle Multimediadateninformationen MI1, MI2, ... MIn unabhängig von einer zu erwartenden Überlastsituation zu markieren und das Mittel E vorsorglich mit allen zugehörigen Zugriffsinformationen ZI1,...ZIn zu versorgen.

Eine weitere Verwendung des in Fig. 3 beschriebenen Ausführungsbeispiels besteht in dem Empfang von bezahlpflichtigen Videodaten oder Musikdaten. In diesem Falle gibt es mindestens einen weiteren Server, nämlich z. B. einen Video on Demand Server oder Music on Demand Server, der ebenfalls am Internet Protokoll Netz IPN angeschlossen ist.

## Patentansprüche

1. Anordnung zur Bereitstellung von bezahlpflichtigen Daten (MM1, MM2, ....MMn), insbesondere Multimediadaten, so ausgebildet,
dass ein Mittel (E) vorgesehen ist, das derart ausgebildet ist, dass wählbaren, bezahlpflichtigen Daten (MM1, MM2, ...MMn) zugeordnete Zugriffsinformationen (ZI1, ZI2, ...ZIn) vor einem Bezahlvorgang hinterlegbar sind,
dass die wählbaren bezahlpflichtigen Daten (MM1, MM2, ...MMn) durch Auswertung der zugeordneten Zugriffsinformationen (ZI1, ZI2, ...ZIn) ausgebbar sind,
**dadurch gekennzeichnet,**
**dass** die hinterlegten Zugriffsinformationen (ZI1, ZI2, ...ZIn) zur Ausgabe der bezahlpflichtigen Daten (MM1, MM2, ....MMn) verwendbar sind, wenn eine erste Signalisierung (S1) vorliegt,
wobei die erste Signalisierung (S1) eine aktuelle oder zu erwartende Überlastsituation beim Bezahlvorgang anzeigt.

2. Anordnung nach Anspruch 1,
**dadurch gekennzeichnet,**
**dass** das Mittel (E) nur Zugriffsinformationen (ZI1, ZI2, ...ZIn) hinterlegt, bei denen eine dritte Signalisierung (S3) vorliegt.

3. Anordnung nach Anspruch 1 oder 2,
**dadurch gekennzeichnet,**
**dass** das Mittel (E) eine die erste Signalisierung (S1) abgebende Erkennungseinheit (LE) aufweist,
**dass** das Mittel (E) hinterlegte Zugriffsinformationen (ZI1, ZI2, ...ZIn) zur Ausgabe der bezahlpflichtigen Daten (MM1, MM2, ....MMn) verwendet, wenn die Erkennungseinheit (LE) die erste Signalisierung (S1) abgibt.

4. Anordnung nach einem der Ansprüche 1 bis 3,
**dadurch gekennzeichnet,**
**dass** in dem Mittel (E) eine eine zweite Signalisierung (S2) abgebende Abbrucheinheit (AB) vorgesehen ist,
**dass** das Mittel (E) die Ausgabe der bezahlpflichtigen Daten (MM1, MM2, ....MMn) abbricht, wenn die zweite Signalisierung (S2) vorliegt.

5. Anordnung nach Anspruch 1,
**dadurch gekennzeichnet,**
**dass** eine eine initialisierende Eingabeeinheit (EG) aufweisende zentrale Einheit (B) bei der Bereitstellung der bezahlpflichtigen Daten vorgesehen ist, wobei die zentrale Einheit (B) derart ausgebildet ist, dass bei Initialisierung durch die Eingabeeinheit (EG) die den wählbaren, bezahlpflichtigen Daten (MM1, MM2, ...MMn) zugeordneten Zugriffsinformationen (ZI1, ZI2, ...ZIn) vor einem Bezahlvorgang in dem Mittel (E) hinterlegt werden.

6. Verfahren zur Bereitstellung von bezahlpflichtigen Daten (MM1, MM2, ....MMn), insbesondere Multimediadaten, so ausgebildet,
dass wählbaren, bezahlpflichtigen Daten (MM1, MM2, ...MMn) zugeordnete Zugriffsinformationen (ZI1, ZI2, ...ZIn) vor einem Bezahlvorgang hinterlegt werden,
dass die bezahlpflichtigen Daten (MM1, MM2, ...MMn) durch Auswertung der zugeordneten Zugriffsinformationen (ZI1, ZI2, ...ZIn) ausgegeben werden,
**dadurch gekennzeichnet,**
**dass** die hinterlegten Zugriffsinformationen (ZI1, ZI2, ...ZIn) zur Ausgabe der bezahlpflichtigen Daten (MM1, MM2, ....MMn) verwendet werden, wenn eine erste Signalisierung (S1) vorliegt,
und **dass** die erste Signalisierung (S1) eine aktuelle oder zu erwartende Überlastsituation beim Bezahlvorgang anzeigt.

7. Verfahren nach Anspruch 6,
**dadurch gekennzeichnet,**
**dass** nur die Zugriffsinformationen (ZI1, ZI2, ...ZIn) hinterlegt werden, bei denen eine dritte Signalisierung (S3) vorliegt.

8. Verfahren nach einem der Ansprüche 6, 7,
**dadurch gekennzeichnet,**
**dass** die Ausgabe der bezahlpflichtigen Daten (MM1, MM2, ....MMn) abgebrochen wird, wenn eine zweite Signalisierung (S2) vorliegt.

9. Verfahren nach Anspruch 8
**dadurch gekennzeichnet,**
**dass** die zweite Signalisierung (S2) dann vorliegt, wenn der Bezahlvorgang nicht innerhalb eines festlegbaren Zeitabschnitts erfolgreich abgeschlossen wurde.

10. Verfahren nach Anspruch 6,
**dadurch gekennzeichnet,**
**dass** durch eine zentrale Einheit (B) bei Initialisierung die den wählbaren, bezahlpflichtigen Daten (MM1, MM2, ...MMn) zugeordneten Zugriffsinformationen (ZI1, ZI2, ...ZIn) vor einem Bezahlvorgang hinterlegt werden.

## Claims

1. An arrangement for providing charge-incurring data (MM1, MM2, ...MMn), particularly multimedia data,
designed in such a way
that a means (E) is provided which is in a form such that access information (ZI1, ZI2, ...ZIn) associated with selectable, charge-incurring data (MM1, MM2, ...MMn) can be stored before a payment operation,
that the selectable charge-incurring data (MM1, MM2, ...MMn) can be output by evaluating the associated access information (ZI1, ZI2, ...ZIn),
**characterized**
**in that** the stored access information (ZI1, ZI2, ...ZIn) is usable to output the charge-incurring data (MM1, MM2, ...MMn) when there is first signaling (S1),
wherein the first signaling (S1) indicates a current or expected overload situation for the payment operation.

2. The arrangement as claimed in claim 1,
**characterized**
**in that** the means (E) stores only access information (ZI1, ZI2, ...ZIn) for which there is third signaling (S3).

3. The arrangement as claimed in claim 1 or 2,
**characterized**
**in that** the means (E) has a recognition unit (LE) which outputs the first signaling (S1),
**in that** the means (E) uses stored access information (ZI1, ZI2, ...ZIn) to output the charge-incurring data (MM1, MM2, ...MMn) when the recognition unit (LE) outputs the first signaling (S1).

4. The arrangement as claimed in one of claims 1 to 3, **characterized**
**in that** the means (E) contains a termination unit (AB) which outputs second signaling (S2),
**in that** the means (E) terminates the output of the charge-incurring data (MM1, MM2, ...MMn) when there is the second signaling (S2).

5. The arrangement as claimed in claim 1,
**characterized**
**in that** a central unit (B) which has an initializing input unit (EG) is provided when the charge-incurring data are provided, the central unit (B) being in the form such that initialization by the input unit (EG) involves the access information (ZI1, ZI2, ...ZIn) associated with the selectable, charge-incurring data (MM1, MM2, ...MMn) being stored in the means (E) before a payment operation.

6. A method for providing charge-incurring data (MM1, MM2, ...MMn), particularly multimedia data,
designed in such a way
that access information (ZI1, ZI2, ...ZIn) associated with selectable, charge-incurring data (MM1, MM2, ...MMn) is stored before a payment operation,
that the charge-incurring data (MM1, MM2, ...MMn) are output by evaluating the associated access information (ZI1, ZI2, ...ZIn),
**characterized**
**in that** the stored access information (ZI1, ZI2, ...ZIn) is used to output the charge-incurring data (MM1, MM2, ...MMn) when there is first signaling (S1),
and **in that** the first signaling (S1) indicates a current or expected overload situation for the payment operation.

7. The method as claimed in claim 6,
**characterized**
**in that** only the access information (ZI1, ZI2, ...ZIn) for which there is third signaling (S3) is stored.

8. The method as claimed in one of claims 6, 7,
**characterized**
**in that** the output of the charge-incurring data (MM1, MM2, ...MMn) is terminated when there is second signaling (S2).

9. The method as claimed in claim 8,
**characterized**
**in that** there is the second signaling (S2) when the payment operation has not been successfully completed within a stipulatable time period.

10. The method as claimed in claim 6,
**characterized**
**in that** a central unit (B), during initialization, stores the access information (ZI1, ZI2, ...ZIn) associated with the selectable, charge-incurring data (MM1, MM2, ...MMn) before a payment operation.

## Revendications

1. Agencement pour la mise à disposition de données payantes (MM1, MM2, ..., MMn), et plus particulièrement de données multimédia, réalisé de manière telle que :
- un moyen (E) est prévu, lequel est réalisé de manière telle que des informations d'accès (ZI1, ZI2, ..., ZIn) associées à des données payantes sélectionnables (MM1, MM2, ..., MMn) peuvent être déposées préalablement à une opération de paiement ;
- les données payantes sélectionnables (MM1, MM2, ..., MMn) peuvent être produites en sortie par évaluation des informations d'accès associées (ZI1, ZI2, ..., ZIn),
**caractérisé en ce que** les informations d'accès déposées (ZI1, ZI2, ..., ZIn) peuvent être utilisées pour la production en sortie des données payantes (MM1, MM2, ..., MMn) en présence d'une première signalisation (S1), la première signalisation (S1) indiquant une situation de surcharge actuelle ou attendue lors de l'opération de paiement.

2. Agencement selon la revendication 1, **caractérisé en ce que** le moyen (E) dépose uniquement des informations d'accès (ZI1, ZI2, ..., ZIn) dans le cas desquelles on a une troisième signalisation (S3).

3. Agencement selon la revendication 1 ou 2, **caractérisé en ce que** :
- le moyen (E) comporte une unité de reconnaissance (LE) qui délivre la première signalisation (S1) ;
- le moyen (E) utilise des informations d'accès déposées (ZI1, ZI2, ..., ZIn) pour produire en sortie les données payantes (MM1, MM2, ..., MMn) lorsque l'unité de reconnaissance (LE) délivre la première signalisation (S1).

4. Agencement selon l'une des revendications 1 à 3, **caractérise en ce que** :
- une unité d'interruption (AB) qui délivre une deuxième signalisation (S2) est prévue dans le moyen (E) ;
- le moyen (E) interrompt la production en sortie des données payantes (MM1, MM2, ..., MMn) en présence de la deuxième signalisation (S2).

5. Agencement selon la revendication 1, **caractérisé en ce qu'**une unité centrale (B) comportant une unité de saisie pour initialisation (EG) est prévue lors de la mise à disposition des données payantes, l'unité centrale (B) étant réalisée de manière telle que, lors de l'initialisation par l'unité de saisie (EG), les informations d'accès (ZI1, ZI2, ..., ZIn) associées aux données payantes sélectionnables (MM1, MM2, ..., MMn) sont déposées préalablement à une opération de paiement dans le moyen (E).

6. Procédé pour mettre à disposition des données payantes (MM1, MM2, ..., MMn), et plus particulièrement des données multimédia, réalisé de manière telle que :
- des informations d'accès (ZI1, ZI2, ..., ZIn) associées à des données payantes sélectionnables (MM1, MM2, ..., MMn) sont déposées préalablement à une opération de paiement ;
- les données payantes (MM1, MM2, ..., MMn) sont produites en sortie par évaluation des informations d'accès associées (ZI1, ZI2, ..., ZIn),
**caractérisé en ce que** :
- les informations d'accès déposées (ZI1, ZI2, ..., ZIn) sont utilisées pour la production en sortie des données payantes (MM1, MM2, ..., MMn) en présence d'une première signalisation (S1) et
- la première signalisation (S1) indique une situation de surcharge actuelle ou attendue lors de l'opération de paiement.

7. Procédé selon la revendication 6, **caractérisé en ce que** seules sont déposées les informations d'accès (ZI1, ZI2, ..., ZIn) dans le cas desquelles on a une troisième signalisation (S3).

8. Procédé selon l'une des revendications 6, 7, **caractérisé en ce que** la production en sortie des données payantes (MM1, MM2, ..., MMn) est interrompue en présence d'une deuxième signalisation (S2).

9. Procédé selon la revendication 8, **caractérisé en ce que** la deuxième signalisation (S2) est présente si l'opération de paiement n'a pas été menée à bon terme dans les limites d'une période de temps déterminable.

10. Procédé selon la revendication 6, **caractérisé en ce que** les informations d'accès (ZI1, ZI2, ..., ZIn) associées aux données payantes sélectionnables (MM1, MM2, ..., MMn) sont déposées par une unité centrale (B), lors de l'initialisation, préalablement à une opération de paiement.
